**Europäisches Patentamt**

**European Patent Office**

**Office européen des brevets**

(19)

(11) Publication number: **0 151 099**
A2

(12) # EUROPEAN PATENT APPLICATION

(21) Application number: **85850025.9**

(22) Date of filing: **24.01.85**

(51) Int. Cl.⁴: **B 60 D 1/00**

(30) Priority: **25.01.84 SE 8400369**

(43) Date of publication of application: **07.08.85**
**Bulletin 85/32**

(84) Designated Contracting States: **DE GB NL**

(71) Applicant: **SLÄPVAGNSKOPPLINGAR AB, Box 216,**
**S-462 01 Vänersborg (SE)**

(72) Inventor: **Bergsten, Björn, Snickareg. 130,**
**S-460 64 Frändefors (SE)**
Inventor: **Lext, Jan, Nydqvistg. 8, S-461 32 Trollhättan**
**(SE)**
Inventor: **Persson, Rickard, Kasenallén 23,**
**S-462 00 Vänersborg (SE)**
Inventor: **Pettersson, Tommy, Marierovägen 6B,**
**S-462 00 Vänersborg (SE)**
Inventor: **Magnusson, Ake, Norra Järnvägsg. 4A,**
**S-462 00 Vänersborg (SE)**

(74) Representative: **Delhage, Einar et al, Bergenstrahle &**
**Lindvall AB Svartensgatan 6, S-116 20 Stockholm (SE)**

(54) **A coupling device for a vehicle.**

(57) A coupling device intended to be provided on vehicle, and including an attachment portion (2) intended to be attached to the vehicle and a coupling portion (8), one (2) of said portions including a tubular female element (10) and the other one (8) a longitudinal male element (12) intended to be received in the female element. Locking means (14, 16, 20, 22) are arranged to fix the two elements (10, 12) with respect to each other in a locking position.

These locking means include first and second abutments (14, 16) of the female element located at a distance from each other along the length of the female element, and third and fourth abutments (20, 22) of the male element located at a distance from each other along the length of the male element, the first and second abutments (14, 16) being arranged to engage in pairs with the third and fourth abutments (20, 22), respectively, in a mutual first turning position of the male and female elements, corresponding to the locking position. The male and female elements have a mutual turning position separate from the locking position, in which they due to their shape are mutually shiftable in their length direction without being hindered by the abutments.

EP 0 151 099 A2

## A coupling device for a vehicle.

The present invention relates to a coupling device according to the preamble of claim 1.

A coupling device for a vehicle is earlier known, in which the coupling portion consists of a drawing device of the ball coupling type, which is intended to be provided on a vehicle to make possible coupling thereto of a trailing vehicle. More particularly the coupling device is a combination coupling with three balls of different sizes, each of which, by turning of the coupling portion, being able to be optionally brought into a drawing position by a simple switching movement. Hereby adaption to different size of the coupling means of the drawn vehicle can be obtained. The male element is unshiftably but pivotally arranged in the female element to make possible turning of the coupling portion.

In another known coupling device for a vehicle a male element associated with the coupling portion is shiftable into and out of a female element, but is not entirely removably therefrom.

It is also known earlier, per se, to use a type of combination couplings, where optionally the attachment means of a drawing ball or the attachment means of a bicycle bracket means can be screwed onto a bracket provided on the vehicle. With such combination devices the switch over between the drawing ball and the bicycle bracket is a cumbersome, time consuming and often dirty work. There therefore exists a need for a coupling device of the kind indicated initially, where the coupling portion may be completely removed from or attached to, respectively, the attachment portion by means of a simple manual operation. An owner of the vehicle having one or more coupling portions of different kinds, e.g. ball portion, or bicycle bracket portion, can then easily either remove the coupling portion in question, when no need of use thereof exists, or change one coupling portion of one kind against a coupling portion of another kind.

The object of the invention is therefore to provide a coupling device of the kind initially indicated, that satisfies the need as mentioned.

2

0151099

This object has been attained in that the coupling device according to the invention has obtained the features stated in claim 1.

The invention will now be described more closely below with reference to to the attached drawings, on which

Figures 1 - 4 in four similar views illustrate the mounting steps for a coupling device according to the invention,

Figures 5 and 6 in two different perspective views more closely illustrate a ball coupling portion included in the coupling device,

Figure 7 in longitudinal section shows a blocking device included in the attachment portion of the coupling device intended to be attached to a vehicle, and

Figure 8 in a similar section as in Figure 7 illustrates the blocking device with the portions thereof taking a locked blocking position.

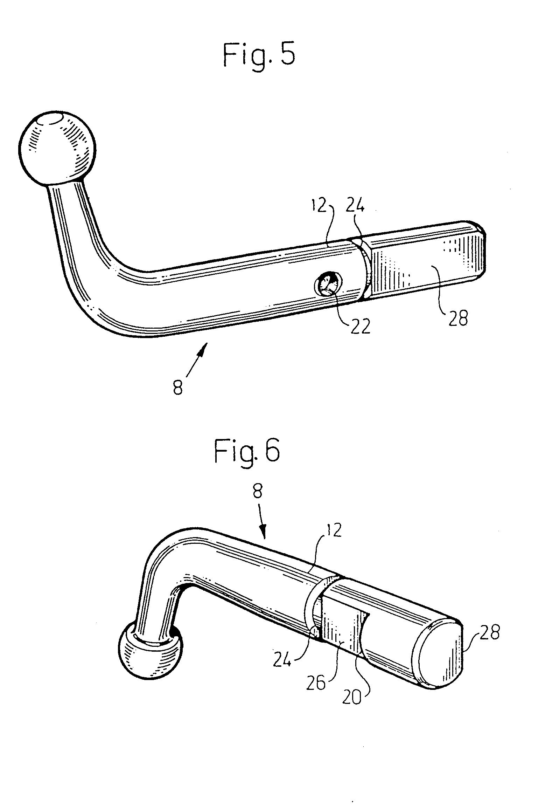

The embodiment illustrated on the drawings of the coupling device according to the invention includes an attachment portion, generally indicated 2, intended to be attached to a vehicle by means of attachment means indicated at 4 and 6. The details of the attachment means 4 and 6 and their attachment to the vehicle is easily realized by the man of the art and need therefore not be described more closely here. Of course, the attachment means are adapted to the type and kind of vehicle. Furthermore, the coupling device includes a ball coupling portion generally indicated 8, the more closer details of which appear in Figures 5 and 6.

The attachment portion 2 includes a tubular female element 10 for receiving a longitudinal male element 12 of the ball coupling porition 8.

The locking means described more closely below are arranged to fix the two elements with respect to each other in a locking position shown in Figure 4.

3

0151099

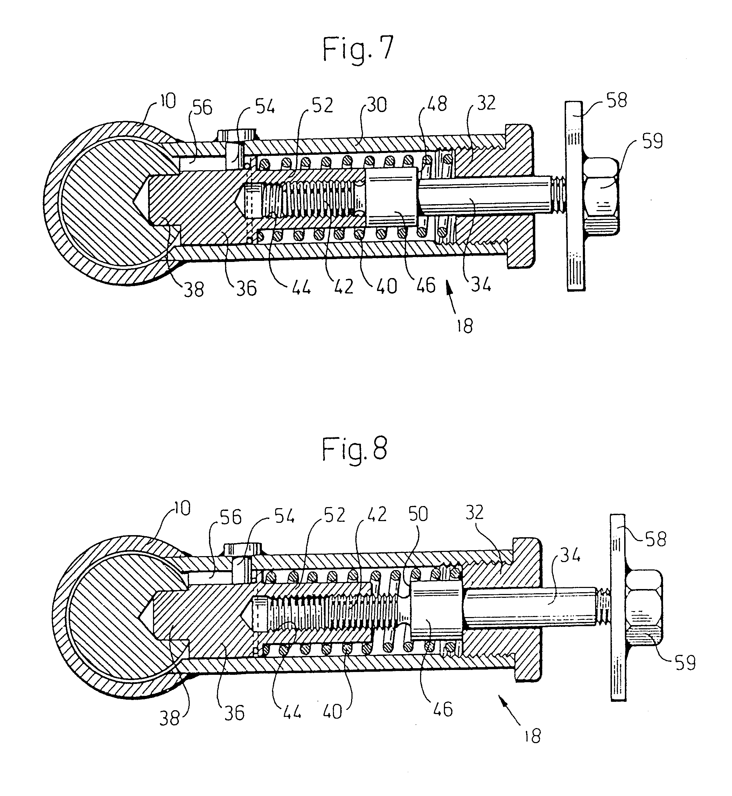

Said locking means in the female element 10 include an abutment element 14 described more closely below and a blocking piston 16 included in a blocking device generally indicated 18, which will be described more closely below with reference to Figures 7 and 8.

The coupling element 14 is in the form of a plate, which transversely extends through the wall of the tubular female element 10 and partly extends into the inner thereof.

The ball coupling portion 8 on the male element 12 has an abutment 20 intended for engagement with the abutment element 14, and in its periphery a hole 22 intended to receive the piston 16. The distance between elements 20 and 22 is thus the same as between elements 14 and 16. The abutment 20 and the hole 22 in the embodiment shown are located on each its side of the ball coupling portion 8. Between the elements 20 and 22 the male element 12 has a peripheral recess 24. The width of the recess 24 is somewhat greater than the thickness of the abutment element 14 and the depth thereof is somewhat greater than the depth of penetration of the abutment element 14 into the tube 10. Between the recess 24 and the abutment 20 the male element 12 furthermore has a bevel 26 on the same level as the bottom of the groove 24. On the same side as the hole 22 the male element 12 furthermore has a bevel 28, that extends from the recess 24 to the free end of the male element 12, and likewise is located on essentially the same level as the bottom of the recess 24.

The blocking device 18 has a tubular housing 30, one end of which being welded to the side wall of the tubular female portion 10, coaxially with a hole therein. At its other end the tube 30 is closed by means of a threaded plug 32. Through the plug 32 a rod 34 extends pivotally and shiftably, carrying at its inner end the piston 16. The piston 16 has a main portion 36 guided in the tube 30 and an end portion 38, the thickness of which is such that the end portion 38 can be received in the hole 22 on the ball coupling portion 8. A screw pressure spring 40 acts between the plug 32 and a shoulder on the piston portion 36. The rod 34 is connected to the piston 16 by extending, by means of a threaded end portion 42, into a correspondingly threaded deep hole 44 in the end of the piston portion 36 facing away from the piston portion 38. Furthermore the rod 34 has a portion 46 with greater section. At its end facing away from the tube 10 the portion 46 has a shoulder 48 and at the opposite end a shoulder 50. The piston portion 36 has a part 52 with a smaller section. The piston portion 36 is furthermore unpivotally guided in the tube 30 by engagement of a pin 54, located in the wall of the tube 30, into an axial groove 56 in the piston portion 36. The rod 34 on its free end has a round washer 58 with a great diameter and a hexagonal nut 59.

Figures 7 and 8 illustrate two different positions of the rod 34 with respect to the piston portion 36. In Figure 7 the rod 34 is screwed into the piston portion 36 into engagement of the shoulder 50 of the portion 46 against the free end of the piston portion 52. The piston 16 can then, against the action of the spring 40, be drawn outwardly so that the end portion 38 thereof comes into a position, in which it no longer extends into the inner of the tube 10.

In Figure 8 the rod 34 has been screwed out of the piston portion 52 so far that the shoulder 48 of the rod portion 46 presses against the plug 32 and, by reaction, the shoulder between the piston portions 36 and 38 is pressed against the side of the male element 12, which is shown introduced into the tube 10 in Figures 7 and 8, the piston portion 36 then being introduced into the hole 22.

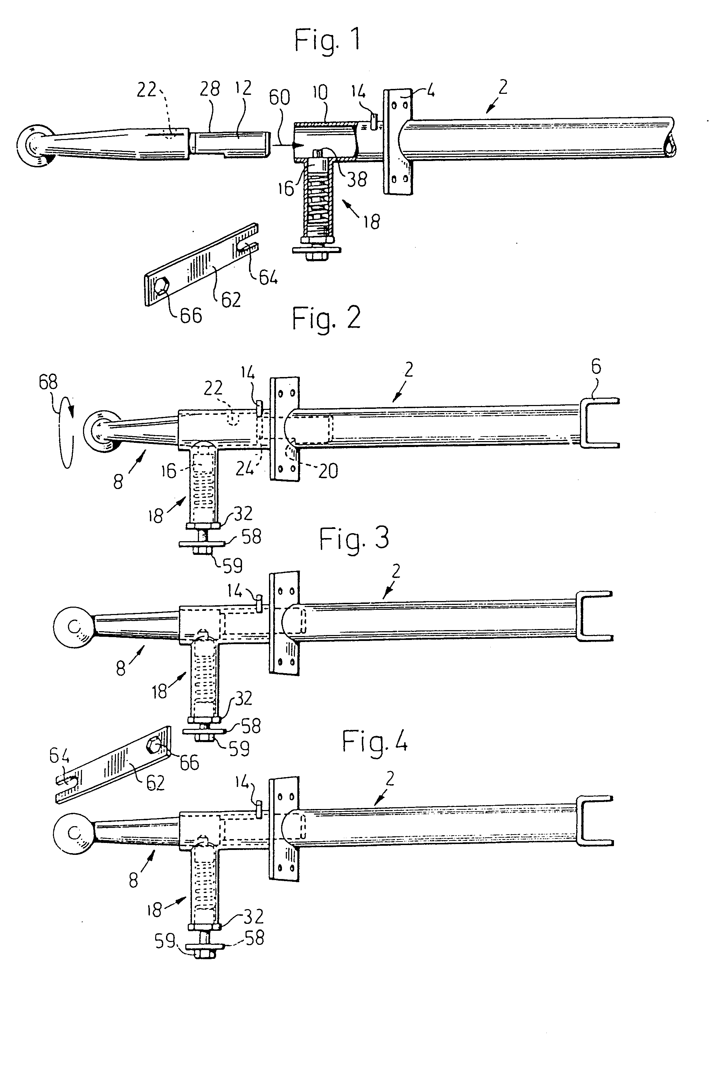

The steps for interconnecting the ball coupling portion 8 and the vehicle attachment portion 2 will now be described more closely below with reference to Figures 1 - 4.

In Fig. 1 the coupling portion 8 with the male portion 12 is firstly moved against the tubular female element 10 of the attachment portion 2 in the direction of arrow 60. To make possible passage of the male element 12 past the end portion 38 of the piston 16 extending into the inner of the tube 10 the piston 16 must be drawn outwardly against the action of the spring 40. More particularly this can be carried through by means of the tool indicated in Figure 1 at 62, one end of which having a slot 64 with a width greater than the diameter of the rod 34. The other end of the tool 62 has a hexagonal hole 66 matching the hexagonal nut 59. The end of the tool 62 provided with a groove is introduced between the disc 58 and the plug 32 with the portion of the rod 34 extending out of the plug 32 received in the slot 64 of the tool 62. The above-mentioned drawing out of the end portion 38 of the piston 16 out of the tube 10 is carried through in that the plug 32 and washer 58 are forced from each other by bending by means of the tool 62.

With the piston end 38 thus drawn out of the tube 10 the ball coupling portion 8 can be introduced into the position shown in Figure 2, the male element 12 then due to the bevel 28 being able to pass past the abutment element 14, so that the later is brought into alignment with the recess 24. The engagement by means of the tool 62 can be released as soon as the ball coupling portion 8 has been introduced so far that the recess 24 has passed the piston 16.

With the ball coupling portion 8 in the introduced position shown in Figure 2, in which the portion of the abutment element 14 introduced into the tube 10 is located in the recess 24, the ball coupling portion 8 is turned, such as is indicated by means of the arrow 68, 180° so that the ball points upwardly. In this turning position the ball coupling portion 8 is drawn out to the position shown in Figure 3, in which further movement outwardly of the ball coupling portion 8 is blocked by engagement between the abutment element 14 and the abutment 20, as well as between the end portion 38 of the piston 16 and the hole 22. The later engagement is automatically attained by means of the force of the spring 40 when the piston 16 is brought into alignment with the hole 22.

At last the tool 62 with the hexagonal hole 66 is brought over the hexagonal nut 59 and screwing out of the rod 34 to the position shown in Figure 8 is carried through. As described above with reference to Figure 8 the shoulder between the portions 36 and 38 of the piston 16 in this position presses against the side of the

0151099

male portion 12. By action of the engagement pressure of the piston 16 against the side of the male portion 12 play between the tube 10 and the male portion 12 is compensated.

Demounting of the ball coupling portion 8 from the attachment portion 2 is carried through in the inverted order. Firstly the rod 34 is screwed by means of the tool 62 to the position shown in Figure 7 and by means of the other end of the same tool 62 the rod 34 is drawn outwardly so that the piston portion 38 is brought out of the engagement with the hole 22, permitting the ball coupling portion 8 to be turned and introduced into the position shown in Figure 2, from which no obstacle is present for drawing out the ball coupling portion 8 if the rod 34 is kept drawn out with the tool 62 when the shoulder 26 passes past the piston 16.

The invention is, of course, not limited to the embodiment shown on the drawing and described above, but can be modified within the scope of the patent claims. Thus the device according to the invention can be used in other contexts than with the ball coupling portion shown. The male element 12 can thus form part of or be connected to any other type of trailer coupling, or a bicycle suspending bracket or the like.

0151099

Claims.

1. A coupling device intended to be provided on a vehicle, and including an attachment portion (2) intended to be attached to the vehicle a the coupling portion (8), one (2) of said portions including a tubular female element (10) and the other one (8) a longitudinal male element (12) intended to be received in the female element, the female and male elements (10,12) having blocking abutments (14,20) arranged to prevent, by engagement with each other in an axial blocking position and in a mutual first turning position of the female and male elements, movement of the male element in direction out of the female element, said elements (10,12) having a second mutual turning position, in which the male element (12) is movable in the female element (10) by virtue of their mutual shaping, characterized by such a mutual shaping of the male and female elements (12,10) and said blocking abutments (14,20) that

a) in said second turning position the male element (12) is completely removable out of the female element (10)

b) in said blocking position the male element (12) by virtue of the mutual engagement of said blocking abutments also being blocked against turning in both directions,

c) mutual turning of said elements (12,10) between said first and second turning positions is only possible in an axial inner position of the male portion (12) further into the female portion (10) than what corresponds to the blocking position,

d) the male element (12) at need is axially shiftable between said inner position and said blocking position, when the male and female elements (12,10) take the first turning position.

2. A device according to claim 1, characterized in that, at the male and female elements (12,10) taking the first turning position, a locking means (18) is movable to and from a locking position, in which the male element (12) is locked against axial shifting towards said inner position.

3. A device according to claim 2, characterized in that said locking means (18) is also arranged to compensate for radial play between said elements (10,12).

4. A device according to any of the preceding claims, characterized in that the blocking abutment (14) of the female element consists of a blocking means with limited axial extension protruding from the inner wall of the female element, and that the male element has a transverse peripheral recess (24) dimensioned to permit passage of this abutment means (14) and thereby the mutual turning to the first turning position, a first longitudinal recess (28) on the inner end of male element (12), and a second longitudinal recess (26) on another side of the male element between said transverse recess (24) and a shoulder (20), forming the shoulder of the female element intended for engagement with said abutment means, said longitudinal recesses (26,28) being dimensioned to permit axial passage of said abutment means (14).

**1/3**

**0151099**

Fig. 1

Fig. 2

Fig. 3

Fig. 4

Fig. 5

Fig. 6

0151099

## Fig. 7

## Fig. 8